# EUROPÄISCHE PATENTSCHRIFT

(11) **EP 2 686 089 B1**
(45) Veröffentlichungstag und Bekanntmachung des Hinweises auf die Patenterteilung: **14.10.2015**
(21) Anmeldenummer: 13702571.4
(22) Anmeldetag: 15.01.2013
(51) Int. Cl.: B01D 67/00, B01D 69/14, B01D 71/26

(54) **FILTERMEMBRAN AUF POLYOLEFINBASIS UND VERFAHREN ZUR HERSTELLUNG**
POLYOLEFIN-BASED FILTER MEMBRANE AND PROCESS FOR PRODUCTION
MEMBRANE FILTRANTE À BASE DE POLYOLÉFINE ET SON PROCÉDÉ DE FABRICATION

(30) Priorität: 16.01.2012 DE 102012000577; 27.01.2012 DE 102012001544
(43) Veröffentlichungstag der Anmeldung: 22.01.2014
(73) Patentinhaber: Ewald Dörken AG, 58313 Herdecke (DE)
(72) Erfinder: PLACKE, Daniel, 44287 Dortmund (DE); SCHRÖDER, Jörn, 58313 Herdecke (DE)
(74) Vertreter: Von Rohr Patentanwälte Partnerschaft mbB
(86) Internationale Anmeldenummer: PCT/EP2013/000098
(87) Internationale Veröffentlichungsnummer: WO 2013/107630

(56) Entgegenhaltungen:
- EP-A1- 0 754 488
- EP-A1- 1 930 156
- EP-A1- 2 065 432
- EP-A2- 0 259 128
- US-A1- 2006 121 269
- US-A1- 2008 182 933

## Beschreibung

Die Erfindung betrifft ein Verfahren zur Herstellung einer Filtermembran und eine nach dem erfindungsgemäßen Verfahren erhältliche Filtermembran.

(Mikro-)poröse Filtermembranen werden in verschiedensten Bereichen industrieller, pharmazeutischer oder medizinischer Anwendungen zur Präzisionsfiltration eingesetzt. In diesen Anwendungen gewinnen Membrantrennprozesse zunehmend an Bedeutung, da diese Prozesse den Vorteil bieten, dass die zu trennenden Stoffe thermisch nicht belastet oder gar geschädigt werden. Mikrofiltrationsmembranen ermöglichen beispielsweise die Entfernung feiner Teilchen oder Mikroorganismen mit Größen bis in den Submikronbereich und sind daher beispielsweise für die Herstellung von gereinigtem Wasser für die Verwendung in Laboratorien oder für die Halbleiterindustrie geeignet. Zahlreiche weitere Anwendungen von Membrantrennprozessen sind aus der Getränkeindustrie, beispielsweise zur Klarfiltration von Getränken, der Biotechnologie oder der Abwassertechnologie, beispielsweise zur Behandlung von Prozessabwässern oder zur Abtrennung von Gärresten sowie zur Aufreinigung von Abwässern aller Art, bekannt. Weitere Anwendungsmöglichkeiten sind die Öl/Wasser-Trennung, die Perforation, die Gas- und Dampfpermeation und die Fest/Flüssig-Trennung im Allgemeinen. Zudem ist ein Einsatz als Wasser- und wasserdampfdurchlässiges Trägermaterial möglich, beispielsweise zur mechanischen Stabilisierung von Membranen. Auch in der Textilindustrie kommen solche Membranen zum Einsatz.

Um die Filtration schnell, effektiv und kostengünstig durchführen zu können, müssen sich hohe (Durch-)Flussraten des Permeats bei möglichst geringen Druckdifferenzen über die Membran erreichen lassen. Bekannte kommerziell verfügbare Mikrofiltrationsmembranen ermöglichen dabei Flussraten im Bereich von etwa 100 l/(m²hbar). Weiterhin sind eine thermische Stabilität und eine chemische Stabilität gefordert, um die Membran in einem weiten Temperatur- und pH-Bereich einsetzen zu können. Dies ist unter anderem auch für die Reinigbarkeit der Membranen durch Säuren, Laugen oder andere Chemikalien von entscheidender Bedeutung. Typische Materialien, aus denen Filtermembranen hergestellt werden, sind beispielsweise Polytetrafluorethylen (PTFE), Polyvinylidenfluorid (PVDF), Polysulfon (PSU) oder Polypropylen (PP), wobei die vorgenannte Aufzählung nicht abschließend ist.

Zur Herstellung von Filtermembranen aus einem polymeren Ausgangsmaterial sind verschiedene Verfahren bekannt. Von kommerzieller Bedeutung sind vor allem der Phaseninversionsprozess und das Recken teilkristalliner Polymerfilme.

Beim Phaseninversionsprozess wird das Polymer in einem Lösungsmittel gelöst, die Lösung zu einem Film gerakelt oder gegossen, in ein Bad mit einem NichtLösungsmittel bzw. Koagulationsmittel getaucht und anschließend getrocknet. Ein Nachteil dieses Prozesses ist, dass die Verwendung organischer Lösungsmittel erforderlich ist und der Prozess mehrere Prozessschritte umfasst, was die Herstellung der Membranen aufwendig und teuer macht. Zudem ist der Prozess weitgehend auf die Verwendung gut löslicher Polymere, wie PVDF oder PSU, beschränkt.

Ein weiteres Verfahren zur Herstellung poröser Membranen ist das Recken teilkristalliner Polymerfilme, beispielsweise aus PP oder PTFE. Gereckte PTFE-Membranen sind beispielsweise unter dem Handelsnamen Gore-Tex® (W. L. Gore & Associates) bekannt. Gereckte PP-Membranen sind unter dem Handelsnamen Celgard® (Celgard) erhältlich. Für die Herstellung der vorgenannten Polymerfilme werden spezielle, hochkristalline Polymere unter hohen Scherkräften extrudiert, in einem weiteren Schritt bei hohen Temperaturen mono- oder biaxial gereckt und dann unter Spannung abgekühlt. Das zuvor beschriebene Verfahren ist aufgrund zahlreicher Verarbeitungsschritte, wie Filmbildung, Aufheizen, Verstrecken und kontrolliertes Abkühlen unter Spannung, verfahrenstechnisch aufwendig und kostenintensiv. Die hohen Temperaturen beim Verstrecken der Polymerfilme und hohe Rohstoffkosten tragen zu hohen Herstellungskosten der bekannten Membranen bei.

Die US 2008/0182933 A1 betrifft einen Füllstoff für einen porösen Polymerfilm, der zur Trennung zwischen Elektroden einer Batterie vorgesehen ist. Darüber hinaus sind weitere Einsatzgebiete für den porösen Film genannt, nämlich als synthetisches Papier, für Sanitärmaterialien, für medizinische Materialien, für Baumaterialien, als luftdurchlässige Schicht im Bereich der Landwirtschaft und als Lichtreflektor für Flüssigkristallanzeigen. Zur Herstellung des bekannten Films, welcher 5-95% Füllstoffpartikeln und einen Weichmacher wird dieser nach der Extrusion mehrfach bei einer Temperatur von 140 °C verstreckt, um einen entsprechend porösen Film zu erhalten.

Aus der EP 0 754 488 A1 ist ein Verfahren zur Herstellung einer mikroporösen Membran bekannt. Die Porenbildung erfolgt hierbei derart, dass ein Gel aus einem thermoplastischen Harz erzeugt wird, das wiederum zu einem Schaum geschäumt wird, indem ein gaserzeugender Hilfsstoff oder Gas in das Harz eingebracht wird oder in dem das Harz in Pulverform bereitgestellt und zu einem porösen Körper gesintert wird. Nach der Porenerzeugung erfolgt eine Verstreckung der Membran.

Aus der EP 0 259 128 A2 ist ein gas- und flüssigkeitsdurchlässiges, verstärktes, poröses Bahnmaterial bekannt, das auch als Filtermembran verwendet werden kann. Die Porenbildung kann dabei auf unterschiedliche Art und Weise erfolgen. Ein bevorzugter Einsatzzweck des bekannten Materials liegt im Bereich der Windeln.

Aus der EP 1 930 156 A1 ist ein Verfahren zur Herstellung eines mikroporösen Polyethylenfilms bekannt, der zur Verwendung als Separator in einer Batterie vorgesehen ist. Dabei sind zwei Herstellungsmethoden für den Film möglich. Zum einen wird eine gelartige Zweikomponentenmischung aus Harzen verwendet, aus der nach Entfernung eines Lösungsmittels eine poröse Membran entsteht. Etwaige Verstreckungsschritte sind rein optional. Zum anderen kann über einen Zwischenschritt einer gelartigen Struktur eine poröse Membran hergestellt werden. Auch hier findet ein Verstrecken nur optional statt.

Aus der EP 2 065 432 A1 und der US 2006/0121269 A1 ist jeweils eine mikroporöse Membran bekannt, die als Separator in Elektrolytbatterien vorgesehen ist. Die Porenbildung wird hierbei durch die Extraktion eines "Plasticizers" vorgenommen. Hierbei handelt es sich um einen Stoff, der zugefügt wird, um die Fluidität beim Ausformen des flächigen Materials zu erhöhen. Die Poren entstehen bei der Extraktion des Plasticizers.

Aufgabe der vorliegenden Erfindung ist es, ein Verfahren der eingangs genannten Art zur Verfügung zu stellen, das eine verfahrenstechnisch einfache und kostengünstige Herstellung von Filtermembranen zulässt. Die nach dem erfindungsgemäßen Verfahren hergestellten Membranen sollen sich aufgrund guter Trenneigenschaften insbesondere vorteilhaft zur Mikrofiltration einsetzen lassen. Insbesondere sollen die erfindungsgemäßen Membranen die Filtration bei hohen Flussraten ermöglichen.

Zur Lösung der vorgenannten Aufgaben ist ein Verfahren zur Herstellung einer Filtermembran gemäß Anspruch 1 vorgesehen

Gegenüber dem bekannten Stand der Technik zur Herstellung von Filtermembranen bietet das erfindungsgemäße Verfahren eine Reihe von Vorteilen. So lässt das erfindungsgemäße Verfahren eine sehr kostengünstige Herstellung von Mikrofiltrationsmembranen zu, da preiswerte Standard-Polyolefine eingesetzt werden können, keine organischen Zusätze wie Lösungsmittel zum Einsatz kommen und/oder die Filmextrusion und das Verstrecken kontinuierlich und inline mit hoher Geschwindigkeit auf einer einzigen Maschinenstrecke durchführbar sind. Das erfindungsgemäße Verfahren ermöglicht darüber hinaus den Einsatz unterschiedlicher polymerer Membranmaterialien als Ausgangsstoffe für die Membranherstellung und die Verwendung unterschiedlicher Füllstoffe und gegebenenfalls weiterer Zuschlagstoffe über breite Konzentrationsbereiche. Dadurch lassen sich die Trenneigenschaften der nach dem erfindungsgemäßen Verfahren erhältlichen Filtermembranen, die beispielsweise durch den Porendurchmesser, die Porösität, die chemische, thermische oder pH-Stabilität, die Farbe und (Durch-)Flussraten bestimmt sind, modifizieren, um die Trenneigenschaften gezielt an eine bestimmte Trennaufgabe anzupassen. Hierbei ermöglicht das erfindungsgemäße Verfahren auch in einfacher Weise die Zugabe unterschiedlichster Zuschlagstoff und Additive zum Membranmaterial, wie beispielsweise die Zugabe von Farbstoffen oder Stabilisatoren. Darüber hinaus sind mit einer derartigen Membran Flussraten > 100 l//(m²h bar) und insbesondere größer 150 l/(m²h bar) ohne weiteres möglich.

Durch die Auswahl bestimmter polymerer Membranmaterialien als Ausgangsstoffe für die Membranherstellung und unterschiedlicher Füllstoffe und gegebenenfalls weiterer Zuschlagstoffe und durch Variation der Konzentrationen der eingesetzten Ausgangs-, Füll- und weiteren Zuschlagstoffe können die Trenneigenschaften der Membran derart vorgegeben werden, dass die erfindungsgemäßen Membranen insbesondere vorteilhaft für die Filtration wässriger Ab- oder Prozesswässer, für die Getränke- oder Sterilfiltration, für die Öl/Wasser-Trennung sowie für die Filtration von Säuren, Laugen oder anderer Chemikalien einsetzbar sind.

Zur Herstellung der erfindungsgemäßen Polymerfilme bzw. Polymermembranen können als polymeres Membranmaterial grundsätzlich beliebige extrudierbare Polymere oder Polymergemische eingesetzt werden. Bevorzugt werden kostengünstige Standard-Polymere eingesetzt, wie Polyolefine und deren Copolymere, wie beispielsweise stark verzweigtes Polyethylen bzw. Polyethylen niedriger Dichte (LDPE), lineares Polyethylen niederer Dichte (LLDPE), Polypropylen oder Polypropylen-Heteropolymere. Insbesondere wird mindestens ein Stoff des Membranmaterials ausgewählt aus der Gruppe von
(i) Polyolefinen;
(ii) Copolymeren von Polyolefinen;
(iii) Mischungen von Polyolefinen und deren Copolymeren; und
(iv) Polymermischungen, umfassend mindestens 10 Gew.-% Polyolefine und/oder deren Copolymere, bezogen auf die Polymermischung.

Das Einbringen des Füllstoffs in das polymere Membranmaterial kann chargenweise bzw. diskontinuierlich in einem Chargenprozess (Batchprozess) erfolgen. Um das erfindungsgemäße Verfahren weiter zu vereinfachen und die Verfahrenkosten zu senken, erfolgt die Beimischung der Füllstoffpartikel zum Polymer vorzugsweise jedoch durch inline-Compoundierung beispielsweise in einem Doppelschneckenextruder oder Ko-Kneter, nämlich einem Einschneckenextruder, der sowohl eine rotierende als auch eine Vor- und Zurückbewegung ausführt. Beim Einbringen des Füllstoffs werden die Füllstoffpartikel in eine Polymermatrix eingebettet und damit in dem Membranmaterial möglichst verteilt immobilisiert.

Nach der Beimischung des Füllstoffs und gegebenenfalls wenigstens eines weiteren Zuschlagstoffes wird das polymere Membranmaterial zu einem Polymerfilm extrudiert. Eine Beimischung ist auch während der Filmextrusion möglich. Bei der Filmextrusion können unterschiedliche Düsengeometrien zum Einsatz kommen, beispielsweise Breitschlitzdüsen, insbesondere vom sogenannten "Coathanger"-Typ, oder Runddüsen, wobei Breitschlitzdüsen bevorzugt sind. Auch die Herstellung von Blasfolien ist durch Extrusion möglich. Bedarfsweise können wenigstens zwei unterschiedliche Füllstoffmengen und/oder unterschiedliche Füllstoffpartikel aufweisende Kunststoffschmelzen zu einem Polymerfilm koextrudiert werden. Es können auch füllstofffreie und füllstoffhaltige Kunststoffschmelzen zu einem Polymerfilm koextrudiert werden. Unter dem Begriff "Koextrusion" im Sinne der Erfindung wird das Zusammenführen von artgleichen oder fremdartigen Kunststoffschmelzen vor dem Verlassen der Profildüse des Extruders verstanden. Durch Koextrusion lassen sich mehrschichtige Polymerfilme herstellen, wobei eine follstoffhaltige Funktionsschicht mit einer oder mehreren Deckschichten mit abweichendem Follstoffgehalt oder mit einer anderen Füllstoffart erzeugt werden können. Die Deckschichten können beispielsweise zur mechanischen, thermischen oder chemischen Stabilisierung des Polymerfilms dienen, die Verkleb- oder Verschweißbarkeit der erfindungsgemäßen Mikrofiltrationsmembran verbessern oder Porösitätsgradienten innerhalb der Mikrofiltrationsmembran erzeugen.

Die Dicke des extrudierten Polymerfilms beträgt vor dem Verstrecken vorzugsweise zwischen 5 und 300 µm, weiter vorzugsweise zwischen 20 und 250 µm, besonders bevorzugt zwischen 30 und 200 µm. Anschließend kommt es dann durch das Verstrecken bzw. Recken des Polymerfilms zu einer weiteren Dickenreduzierung.

Der extrudierte Polymerfilm wird erfindungsgemäß in wenigstens einem an die Filmextrusion anschließenden Verfahrensschritt mono- oder biaxial gereckt bzw. verstreckt, was zur Porenbildung führt. Bei dem Verstrecken reißen an der Grenze zwischen den Füllstoffpartikeln und der Polymermatrix Löcher auf, die Poren der Membran bilden. Das Recken bzw. Verstrecken kann vorzugsweise inline, beispielsweise monoaxial, in einem aus mehreren Walzenpaaren bestehenden Reckwerk, erfolgen. Dadurch ist eine kontinuierliche Fertigung einer erfindungsgemäßen Mikrofiltrationsmembran bei hoher Geschwindigkeit auf einer Maschinenstrecke möglich, was zu geringen Herstellungskosten beiträgt. Alternativ ist auch ein monooder biaxiales offline-Verstrecken, beispielsweise in einem Spannrahmen, möglich.

Der extrudierte und gereckte Polymerfilm enthält den Füllstoff in einer Konzentration zwischen 20 und 90 Gew.-%, vorzugsweise zwischen 30 und 80 Gew.-%, besonders bevorzugt zwischen 40 und 70 Gew.-%, jeweils bezogen auf das Gesamtgewicht des Polymerfilms.

Als Füllstoff eignet sich insbesondere ein anorganischer Füllstoff, weiter insbesondere aus der Gruppe der Carbonate, vorzugsweise Calciumcarbonat, Magnesiumcarbonat, Natriumcarbonat oder Bariumcarbonat, und/oder aus der Gruppe der Siliziumdioxyde und der Silikate, vorzugsweise Magnesiumsilikathydrat (Talk), Glimmer, Feldspat oder Gläser, und/oder aus der Gruppe der Sulfate, vorzugsweise Calciumsulfat, Magnesiumsulfat, Bariumsulfat oder Aluminiumsulfat. Alternativ oder ergänzend kann dem polymeren Membranmaterial ein organischer Füllstoff, insbesondere aus der Gruppe der Polymere, beigemischt werden. Es versteht sich, dass auch Mischungen und Kombinationen der vorgenannten Gruppen und Verbindungen als Füllstoff(e) eingesetzt werden können. Besonders bevorzugt wird als Füllstoff Calciumcarbonat in Form von Calcit (Kalkspat) und/oder Aragonit, insbesondere als natürliches Gestein in Form von Kalkstein oder Kreide, beigemischt. Durch Verwendung der letztgenannten Füllstoffe lassen sich Mikrofiltrationsmembranen mit besonders guten Trenneigenschaften herstellen. Insbesondere zeichnen sich die so erhältlichen Mikrofiltrationsmembranen durch hohe Flussraten und geringe Rohstoffkosten aus.

Eine besonders bevorzugte Ausführungsform betrifft einen Polymerfilm, der 40 bis 70 Gew.-% Calciumcarbonat und 30 bis 60 Gew.-% PP, LDPE oder LLDPE sowie Mischungen aus diesen enthält.

Geeignet sind grundsätzlich partikelförmige Füllstoffe mit einem mittleren Partikeldurchmesser von 0,1 bis 10 µm, vorzugsweise von 0,1 bis 8 µm, besonders bevorzugt von 1 bis 5 µm. In Abhängigkeit von dem eingesetzten Füllstoff, der Menge des Füllstoffs und/oder von der Partikelgröße lassen sich die Trenneigenschaften der erfindungsgemäßen Mikrofiltrationsmembran auf vielfältige Weise verändern und an die Trennaufgabe anpassen. So lassen sich beispielsweise die Porösität, der Porendurchmesser, die Wärme- und die elektrische Leitfähigkeit der erfindungsgemäßen Mikrofiltrationsmembranen in einem weiten Bereich einstellen und vorgeben.

Die Temperaturen bei dem Verstrecken des Polymerfilms können zwischen 20 und 180 °C unter dem Schmelz- bzw. Erweichungspunkt des verwendeten Matrixpolymers liegen, vorzugsweise zwischen 40 und 120 °C, besonders bevorzugt zwischen 50 und 110 °C, unterhalb der Schmelz- bzw. Erweichungstemperatur des verwendeten Matrixpolymers. Das erfindungsgemäße Verfahren zeichnet sich somit durch moderate Betriebstemperaturen bei dem Verstrecken aus, was das Verfahren vereinfacht und die Herstellungskosten der erfindungsgemäßen Mikrofiltrationsmembran weiter reduziert.

Das Verstrecken kann um einen Faktor zwischen 1,5 und 7, vorzugsweise zwischen 2 und 5, besonders bevorzugt zwischen 2 und 4, erfolgen. Dadurch lassen sich die Dicke der Membran und die Trenneigenschaften, insbesondere die gewünschte Porengröße, in weiten Bereichen variieren und an die Trennaufgabe anpassen.

Das erfindungsgemäße Verfahren erlaubt in einfacher Weise die Zugabe von weiteren Zuschlagstoffen und Additiven vor oder während der Filmextrusion des eingesetzten Polymers. Das Zusammenführen von Membranmaterial und Zuschlagstoff kann gleichzeitig mit der Füllstoffbeimischung zum Membranmaterial oder nach der Füllstoffbeimischung vorgesehen sein. Das Einarbeiten des Füllstoffs und weiterer Zuschlagstoffe in das Membranmaterial kann beispielsweise durch Schmelzemischen erfolgen.

In diesem Zusammenhang kann durch Beimischen wenigstens eines Hydrophilierungsadditives zu dem polymeren Membranmaterial eine intrinsische Hydrophilierung des Polymers vor oder während der Filmextrusion erreicht werden. Durch die Hydrophilierung werden die Feuchtigkeitsaufnahme der Membran, insbesondere die Aufnahme und der Durchtritt von flüssigem Wasser, verbessert und höhere Flussraten bei der Filtration sichergestellt, was insbesondere bei Verwendung von hydrophoben Polymeren als Membranmaterialien vorteilhaft ist. Flüssigkeiten mit hoher Oberflächenspannung, wie beispielsweise Wasser, können so die Poren der erfindungsgemäß hydrophilierten Membran benetzen und die Membran durchdringen. Die erfindungsgemäße Membran eignet sich damit insbesondere für die Mikrofiltration von wässrigen Suspensionen bei hohen (Durch-)Flussraten.

Eine intrinsische Hydrophilierung der erfindungsgemäßen Mikrofiltrationsmembran führt zu einer Reihe von Vorteilen. Das erfindungsgemäße Verfahren ermöglicht es zum einen, das Hydrophilierungsadditiv in einem einstufigen Verfahren einzubringen. Bei den aus dem Stand der Technik bekannten Verfahren sind dazu wenigstens zwei Prozessschritte erforderlich, da das Hydrophilierungsadditiv erst nach Herstellung der Membran aufgebracht wird, beispielsweise durch Foulardieren. Danach ist ein so genanntes "Einfahren" der Membran notwendig, bei dem das in den Poren befindliche Hydrophilierungsadditiv durch mehrstündiges Durchspülen mit klarem Wasser sukzessive ausgespült und durch Wasser ersetzt wird. Die erfindungsgemäß vorgesehene intrinsische Hydrophilierung kommt dagegen ohne Einfahren der Membran aus, was Zeit und kostensparend ist. Durch das Einmischen des Hydrophilierungsadditives in die Schmelze wird eine dauerhafte intrinsische Hydrophilierung erreicht. Im Gegensatz zu dem aus dem Stand der Technik bekannten Verfahren kann das Hydrophilierungsadditiv erfindungsgemäß nicht im Laufe der Zeit von der Oberfläche der Membran abgewaschen werden. Dies sorgt für eine höhere Standzeit der Membran, was den Aufwand für Wartung und Reparaturen verringert. Auch ein Trockenfallen der erfindungsgemäßen Mikrofiltrationsmembran ist problemlos möglich, da im Gegensatz zu den aus dem Stand der Technik bekannten nachträglich hydrophilierten Membranen kein Einfahren durch Vorbenetzung notwendig ist.

Bei einer bevorzugten Ausführungsform wird ein amphiphiles Hydrophilierungsadditiv zugegeben. Das Hydrophilierungsadditiv kann ein (amphiphiles) Tensid sein, insbesondere ein anionisches, kationisches, nicht-ionisches oder kationisch-anionisches Tensid. Durch die Verwendung der vorgenannten Additive ist eine sehr wirkungsvolle intrinsische Hydrophilierung bei geringen Kosten möglich. Geeignete Hydrophilierungsmittel sind Amphiphile und Tenside mit einem Molekulargewicht von weniger als 100,000 Dalton, die mit dem verwendeten Ausgangspolymer mischbar sind.

Bei einer vorteilhaften Ausführungsform des erfindungsgemäßen Verfahrens wird ein amphiphiles Hydrophilierungsadditiv eingesetzt, das wenigstens einen Alkyl-, Acyl-, Aryl- und/oder Arylacyl-Rest, gekoppelt mit einer heteroatomhaltigen Gruppe, insbesondere aus der Gruppe der Glykole, Polyoxyethylene, Sulfide, Sulfonate, Amine, Amide, Phosphonate und Phosphate, aufweist. Derartige Hydrophilierungsadditive können in Form von Masterbatches bzw. Granulaten vorliegen, die unterschiedliche Zusammensetzungen aufweisen.

Als besonders vorteilhaft hat sich dargestellt, wenn ein Hydrophilierungsadditiv mit der allgemeinen Zusammensetzung CN₃CH₂-(CH₂CH₂)x-(OCH₂CH₂)y-OH eingesetzt wird, wobei x und y üblicherweise einen Wert zwischen 1 und 20 annehmen können. Beispiele hierfür sind die Produkte Irgasurf®HL562 (Ciba Speciality Chemicals) und Unithox^{™}550 (Baker Hughes). Alternativ können Perfluoralkylverbindungen mit einer anionischen Methacrylat-Endgruppe als Hydrophilierungsadditive zum Einsatz kommen. Zu solchen Hydrophilierungsadditiven gehört beispielsweise ZONYL®7950 (DuPont Speciality Chemicals). Ähnliche Verbindungen, die stattdessen Acrylat-, Phosphat- oder Amin-Endgruppen enthalten, können ebenfalls eingesetzt werden.

Die erfindungsgemäße Mikrofiltrationsmembran kann in diesem Zusammenhang zusätzlich zu dem wenigstens einen Füllstoff zwischen 0,1 und 20 Gew.-% wenigstens eines geeigneten Hydrophilierungsadditivs enthalten, vorzugsweise zwischen 0,5 und 15 Gew.-%, besonders bevorzugt zwischen 1 bis 10 Gew.-% des Hydrophilierungsadditives. Des Weiteren umfasst die Erfindung Mikrofiltrationsmembranen, die einen insbesondere hydrophilen Füllstoff mit einer Konzentration zwischen 10 und 90 Gew.-%, vorzugsweise zwischen 30 und 80 Gew.-%, besonders bevorzugt zwischen 45 und 70 Gew.-%, enthalten und wenigstens ein Hydrophilierungsadditiv mit einer Konzentration zwischen 0,1 und 15 Gew.-%, vorzugsweise zwischen 0,5 und 10 Gew.-%, besonders bevorzugt zwischen 0,5 bis 8 Gew.-%. Unter einem hydrophilen Füllstoff im Sinne der Erfindung werden insbesondere alle Füllstoffe verstanden, die geeignet sind, durch polare Wechselwirkungen mit Wasser die Benetzbarkeit des Polymers zu erhöhen. Dazu geeignet sind insbesondere anorganische Füllstoffe ionischer und nicht-ionischer Natur, sowie alle Partikel, die durch Oberflächenmodifizierung eine dauerhaft polare Oberfläche besitzen. Denkbare hydrophile Füllstoffe sind beispielsweise Kieselsäuren, Salze oder entsprechend oberflächenmodifizierte Polymerpartikel.

Eine bevorzugte Ausführungsform der Erfindung betrifft einen Polymerfilm, der 40 bis 70 Gew.-% Calciumcarbonat, 1 bis 10 Gew.-% eines Hydrophilierungsadditives und 20 bis 59 Gew.-% PP, LDPE oder LLDPE sowie Mischungen aus diesen aufweist.

Die nach dem erfindungsgemäßen Verfahren erhältliche Mikrofiltrationsmembran ermöglicht die Filtration bei hohen Flussraten, wobei bei Verwendung von Leitungswasser Flussraten von wenigstens 100 l/(m²hbar), vorzugsweise wenigstens 130 l/(m²hbar), besonders bevorzugt wenigstens 150 l/(m²hbar), erreicht werden. Höhere Flussraten sind möglich und von Vorteil. Die erfindungsgemäßen Mikrofiltrationsmembranen weisen Porengrößen in einem Bereich von 0,1 bis 5 µm auf, vorzugsweise in einem Bereich von 0,1 bis 2 µm, besonders bevorzugt in einem Bereich zwischen 0,2 und 1 µm. Die Porösität der erfindungsgemäßen Mikrofiltrationsmembran beträgt dabei wenigstens 30 %, vorzugsweise wenigstens 40%.

### Beispiele

Die vorliegende Erfindung wird durch die nachstehenden bevorzugten Ausführungsbeispiele detaillierter beschrieben, welche die vorliegende Erfindung jedoch keinesfalls beschränken. Die in den bevorzugten Ausführungsbeispielen angegebenen Eigenschaften wurden mit dem folgenden Testverfahren bestimmt. Die Messung der Durchflussrate erfolgte mit einem Membranteststand ("Memcell", Osmo Membrane Systems), in dem die Membran im Querstromverfahren mit Drücken von 0,1 bis 64 bar beaufschlagt wurde. Das Permeat wurde gesammelt und aus der Permeatmenge pro Minute wurde die Flussrate errechnet. Alle Flussraten wurden auf die Einheit l/(m²hbar) normiert. Als Konzentrat wurde eine einprozentige Titandioxid-Suspension mit einem mittleren Teilchendurchmesser von 0,5 µm verwendet. Der Erfolg der Membranfiltration ließ sich anhand des klaren Permeats optisch bestätigen.

### Beispiel 1

Als polymeres Membranmaterial für die Herstellung eines Polymerfilms wurde LDPE eingesetzt. Dem Membranmaterial wurde Kreide als Füllstoff mit einem mittleren Teilchendurchmesser von ca. 2 µm beigemischt. Anschließend wurde die so erhaltene Mischung zur Bildung des Polymerfilms extrudiert Der Kreidegehalt des Polymerfilms betrug 65 Gew.-% und der LDPE-Gehalt 35 Gew.-%. Die Dicke des Polymerfilms betrug 90 µm. Der Polymerfilm wurde bei 85 °C um den Faktor 4 verstreckt, die Dicke des Polymerfilms betrug anschließend 25 µm. Die Flussrate des Polymerfilms bei einer Druckdifferenz von 5 bar betrug 160 l/(m²hbar) und das Permeat war frei von Trübungen.

### Beispiel 2

Als polymeres Membranmaterial für die Herstellung eines Polymerfilms wurde LDPE eingesetzt. Dem Membranmaterial wurde Glimmer als Füllstoff mit einem mittleren Teilchendurchmesser von ca. 8,5 µm beigemischt. Anschließend wurde die so erhaltene Mischung zur Bildung des Polymerfilms extrudiert. Der Glimmergehalt des Polymerfilms betrug 55 Gew.-% und der LDPE-Gehalt 45 Gew.-%. Die Dicke des Polymerfilms betrug 150 µm. Der Polymerfilm wurde bei 110 °C um den Faktor 3 verstreckt, die Dicke des Polymerfilms betrug anschließend 50 µm. Die Flussrate des Polymerfilms bei einer Druckdifferenz von 5 bar betrug 120 l/(m²hbar) und das Permeat war frei von Trübungen.

### Beispiel 3

Als polymeres Membranmaterial für die Herstellung eines Polymerfilms wurde PP eingesetzt. Dem Membranmaterial wurden Bariumsulfat und Calciumsulfat als Füllstoffe mit einem mittleren Teilchendurchmesser von ca. 5 µm beigemischt. Anschließend wurde die so erhaltene Mischung zur Bildung des Polymerfilms extrudiert. Der Bariumsulfatgehalt des Polymerfilms betrug 25 Gew.-%. der Calciumsulfatgehalt des Polymerfilms betrug 25 Gew.-% und der PP-Gehalt 50 Gew.-%. Die Dicke des Polymerfilms betrug 100 µm. Der Polymerfilm wurde bei 110 °C um den Faktor 3,5 verstreckt, die Dicke des Polymerfilms betrug anschließend 30 µm. Die Flussrate des Polymerfilms bei einer Druckdifferenz von 5 bar betrug 200 l/(m²hbar) und das Permeat war frei von Trübungen.

Beispiel 4:

Als polymeres Membranmaterial für die Herstellung eines Polymerfilms wurde LLDPE eingesetzt. Dem Membranmaterial wurden Kreide als Füllstoff mit einem mittleren Teilchendurchmesser von ca. 2 µm und ein Hydrophilierungs-additiv (Unithox^{™}550 - Baker Hughes) beigemischt. Anschließend wurde die so erhaltene Mischung zur Bildung des Polymerfilms extrudiert. Der Polymerfilm wies einen Anteil von 65 Gew.-% Kreide, 5 Gew.-% Hydrophilierungsadditiv und 30 Gew.-% LLDPE auf. Die Dicke des Polymerfilms betrug 90 µm. Der Polymerfilm wurde bei 70 °C um den Faktor 3,6 verstreckt. Die Dicke des Polymerfilms betrug anschließend 25 µm. Die Flussrate der Membran bei einer Druckdifferenz von 0,25 bar betrug 810 l/(m²hbar) und das Permeat war frei von Trübungen.

### Beispiel 5:

Als polymeres Membranmaterial für die Herstellung eines Polymerfilms wurde PP eingesetzt. Dem Ausgangsmaterial wurden Kreide als Füllstoff mit einem mittleren Teilchendurchmesser von ca. 1,4 µm und ein Hydrophilierungs-additiv (Irgasurf®HL562 - Ciba Speciality Chemicals) beigemischt. Anschließend wurde die so erhaltene Mischung zur Bildung des Polymerfilms extrudiert. Der Polymerfilm wies einen Anteil von 60 Gew.-% Kreide, 8 Gew.-% Hydrophilierungsadditiv und 27 Gew.-% PP auf. Die Dicke des Polymerfilms betrug 150 µm. Der Polymerfilm wurde bei 95 °C um den Faktor 3,5 verstreckt Die Dicke des Polymerfilms betrug anschließend 47 µm. Die Flussrate des Polymerfilms bei einer Druckdifferenz von 0,75 bar betrug 310 l/(m²hbar) und das Permeat war frei von Trübungen.

### Beispiel 6:

Als polymeres Membranmaterial für die Herstellung eines Polymefilms wurde eine Polymermischung von LLDPE und LDPE eingesetzt. Dem Membranmaterial wurden Bariumsulfat als Füllstoff mit einem mittleren Teilchendurchmesser von ca. 5 µm und ein Hydrophilierungsadditiv (Unithox^{™}550 -Baker Hughes) beigemischt. Anschließend wurde die so erhaltene Mischung zur Bildung des Polymerfilms extrudiert. Der Polymerfilm wies einen Anteil von 55 Gew.-% Bariumsulfat, 5 Gew.% Hydrophilierungsadditiv, 30 Gew.-% LLDPE und 10 Gew.-% LDPE auf. Die Dicke des Polymerfilms betrug 120 µm. Der Polymerfilm wurde bei 90 °C um den Faktor 3 verstreckt, die Dicke des Polymerfilms betrug anschließend 43 µm. Die Flussrate des Polymerfilms bei einer Druckdifferenz von 0,5 bar betrug 230 l/(m²hbar) und das Permeat war frei von Trübungen.

### Beispiel 7:

Als polymeres Membranmaterial für die Herstellung eines Polymerfilms wurde eine Polymermischung von LLDPE und LDPE eingesetzt. Dem Membranmaterial wurden Glimmer als Füllstoff mit einem mittleren Teilchendurchmesser von ca. 8,5 µm und ein Hydrophilierungsadditiv (ZONYL®7950 - DuPont Specialty Chemicals) beigemischt. Anschließend wurde die so erhaltene Mischung zur Bildung des Polymerflms extrudiert. Der Polymerfilm wies einen Anteil von 50 Gew.-% Glimmer, 4 Gew.-% Hydrophilierungsadditiv, 16 Gew.-% LLDPE und 30 Gew.-% LDPE auf. Die Dicke des Polymerfilms betrug 120 µm. Der Polymerfilm wurde bei 60 °C um den Faktor 4 verstreckt, die Dicke des Polymerfilms betrug anschließend 29 µm. Die Flussrate des Polymerfilms bei einer Druckdifferenz von 0,25 bar betrug 875 l/(m²hbar) und das Permeat war frei von Trübungen.

Die Erfindung lässt es zu, die in den Ansprüchen genannten und/oder zuvor beschriebenen Merkmale miteinander zu kombinieren, auch wenn die Kombination nicht im Einzelnen beschrieben ist. Die vorstehenden Werteangaben und die angegebenen Intervalle erfassen jeweils sämtliche Werte, also nicht nur die Untergrenzen bzw. bei Intervallen die Intervallgrenzen, ohne dass dies einer ausdrücklichen Erwähnung bedarf.

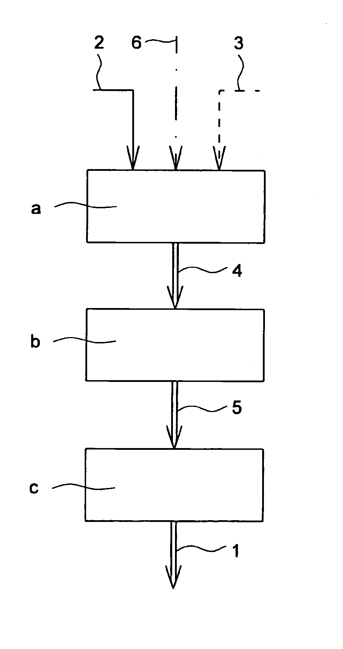

Im Folgenden wird eine Ausführungsvariante eines erfindungsgemäßen Verfahrens zur Herstellung einer Mikrofiltrationsmembran am Beispiel der Figur erläutert. Die Erfindung ist nicht auf die dargestellte Ausführungsvariante beschränkt. Bedarfsweise können Merkmale der dargestellten Ausführungsvariante mit den zuvor beschriebenen und/oder in den Ansprüchen genannten Merkmalen kombiniert werden.

Die einzige Figur zeigt schematisch den Verfahrensablauf eines Verfahrens zur Herstellung einer Mikrofiltrationsmembran 1. Das dargestellte Verfahren sieht in einem ersten Verfahrensschritt a vor, ein polymeres Membranmaterial 2, das das Ausgangsmaterial der Membranherstellung darstellt, mit wenigstens einem Follstoff 3 zu vermischen. In der Mischung bildet das Membranmaterial 2 eine Polymermatrix für den Füllstoff 3. Das in dem Verfahrensschritt a erhältliche, den Füllstoff 3 aufweisende Membranmaterial 4 wird anschließend in einem Verfahrensschritt b zu einem mit dem Füllstoff beladenen Polymerfilm 5 extrudiert. Das Einmischen des Füllstoffs 3 in das Membranmaterial 2 und das Extrudieren des Polymerfilms 5 können durch inline-Compoundierung mittels eines Doppelschneckenextruders oder dergleichen erfolgen.

Der Polymerfilm 5 wird in einem dritten Verfahrensschritt c zur Porenbildung monooder biaxial verstreckt, was ebenfalls inline in einem der Extrudiereinrichtung nachgeschalteten Reckwerk erfolgen kann.

Gegebenenfalls kann vorgesehen sein, dem Membranmaterial 2 zusätzlich zum Füllstoff 3 wenigstens ein Hydrophilierungsadditiv 6 beizumischen. Dadurch kann erreicht werden, dass Flüssigkeiten mit hoher Oberflächenspannung, wie beispielsweise Wasser, die Poren der Mikrofiltrationsmembran 1 benetzen und die Mikrofiltrationsmembran 1 bei hohen Flussraten durchdringen können, was insbesondere dann von Bedeutung ist, wenn ein hydrophobes Membranmaterial 2, wie beispielsweise PTFE, PVDF und PP, als Ausgangsmaterial für die Membranherstellung eingesetzt wird.

### Bezugszeichenliste

- 1: Mikrofiltrationsmembran
- 2: Membranmaterial
- 3: Füllstoff
- 4: Membranmaterial
- 5: Polymerfilm
- 6: Hydrophilierungsadditiv

## Patentansprüche

1. Verfahren zur Herstellung einer Filtermembran (1), mit der Flussraten 100 l/m² h bar möglich sind, wobei einem polymeren Membranmaterial (2) als Ausgangsmaterial für die Membranherstellung wenigstens ein Füllstoff (3) und, gegebenenfalls, wenigstens ein weiterer Zuschlagstoff, beigemischt werden, wobei ein Anteil des Füllstoffes (3) in dem Polymerfilm von 20 bis 90 Gew.-% enthalten ist, wobei das den Füllstoff (3) und gegebenenfalls den weiteren Zuschlagstoff aufweisende Membranmaterial (4) zu einem mit dem Füllstoff (3) und gegebenenfalls dem weiteren Zuschlagstoff beladenen Polymerfilm (5) extrudiert wird, wobei der Polymerfilm (5) zur Porenbildung insbesondere mono- und/oder biaxial verstreckt wird wobei ein Füllstoff (3) mit einem mittleren Partikeldurchmesser von 0,1 bis 10 µm eingesetzt wird **dadurch gekennzeichnet, dass** an der Grenze zwischen Füllstoffpartikeln und der Polymermatrix Löcher aufreißen, die Poren der Filtermembran (1) mit einer Porengröße im Bereich von 0,1 bis 5 µm bilden.

2. Verfahren nach Anspruch 1, **dadurch gekennzeichnet, dass** mindestens ein Stoff des Membranmaterials (2) ausgewählt wird aus der Gruppe
(i) Polyolefinen;
(ii) Copolymeren von Polyolefinen;
(iii) Mischungen von Polyolefinen und deren Copolymeren; und
(iv) Polymermischungen, umfassend mindestens 10 Gew.-% Polyolefine und/oder deren Copolymere, bezogen auf die Polymermischung.

3. Verfahren nach Anspruch 1 oder 2, **dadurch gekennzeichnet, dass** ein Anteil des Füllstoffes (3) in dem Polymerfilm (5) von 30 bis 80 Gew.-%, besonders bevorzugt von 40 bis 70 Gew.-%, enthalten ist.

4. Verfahren nach einem der vorangehenden Ansprüche, **dadurch gekennzeichnet, dass** ein anorganischer Füllstoff (3), insbesondere aus der Gruppe der Carbonate, vorzugsweise Calciumcarbonat, Magnesiumcarbonat, Natriumcarbonat oder Bariumcarbonat, und/oder aus der Gruppe der Siliziumdioxide und der Silikate, vorzugsweise Magnesiumsilikathydrat, Glimmer, Feldspat oder Gläser, und/oder aus der Gruppe der Sulfate, vorzugsweise Calciumsulfat, Magnesiumsulfat, Bariumsulfat oder Aluminiumsulfat, und/oder ein organischer Füllstoff (3), insbesondere aus der Gruppe der Polymere, und/oder eine Mischung und Kombination der vorgenannten Gruppen und Verbindungen als Füllstoff (3) eingesetzt wird.

5. Verfahren nach einem der vorhergehenden Ansprüche, **dadurch gekennzeichnet, dass** ein Füllstoff (3) mit einem mittleren Partikeldurchmesser von 0, 1 bis 8 µm, besonders bevorzugt von 1 bis 5 µm, eingesetzt wird.

6. Verfahren nach einem der vorhergehenden Ansprüche, **dadurch gekennzeichnet, dass** die Verstreckungstemperatur zwischen 20 und 180 °C, vorzugsweise zwischen 40 und 120 °C, besonders bevorzugt zwischen 50 und 110 °C, unterhalb des Schmelz- und Erweichungspunktes des polymeren Membranmaterials (2) liegt.

7. Verfahren nach einem der vorhergehenden Ansprüche, **dadurch gekennzeichnet, dass** das Verstrecken um einen Faktor zwischen 1,5 und 7, vorzugsweise zwischen 2 und 5, besonders bevorzugt zwischen 2 und 4, erfolgt.

8. Verfahren nach einem der vorhergehenden Ansprüche, **dadurch gekennzeichnet, dass** dem polymeren Membranmaterial (2) vor oder während der Filmextrusion wenigstens ein Hydrophilierungsadditiv (6), insbesondere ein amphiphiles Hydrophilierungsadditiv (6), als weiterer Zuschlagstoff zugegeben wird, insbesondere wobei das Hydrophilierungsadditiv (6) ein Tensid ist, bevorzugt ein anionisches, kationisches, nicht-ionisches oder kationisch-anionisches Tensid.

9. Verfahren nach einem der vorhergehenden Ansprüche, **dadurch gekennzeichnet, dass** ein amphiphiles Hydrophilierungsadditiv (6) eingesetzt wird, wobei das amphiphile Hydrophilierungsadditiv (6) wenigstens einen Alkyl-, Acyl-, Arylund/oder Arylacyl-Rest, gekoppelt mit einer heteroatomhaltigen Gruppe, insbesondere aus der Gruppe der Glykole, Polyoxyethylene, Sulfide, Sulfonate, Amine, Amide, Phosphonate und Phosphate, aufweist.

10. Verfahren nach einem der vorhergehenden Ansprüche 8 oder 9, **dadurch gekennzeichnet, dass** ein Anteil des Hydrophilierungsadditives (6) in dem Polymerfilm (5) von 0,1 bis 20 Gew.-%, vorzugsweise von 0,5 bis 15 Gew.-%, besonders bevorzugt von 1,0 bis 10 Gew.-%, erhalten wird.

11. Filtermembran, mit der Flussraten > 100 l/m³ h bar möglich sind, erhältlich durch ein Verfahren nach einem der vorhergehenden Ansprüche, wobei die Filtermembran Porengrößen im Bereich von 0,1 bis 5 µm aufweist.

## Claims

1. A method for the production of a filter membrane (1), by means of which flow rates of > 100 l/m² h bars are possible, wherein at least one filler (3), and optionally, at least one additional additive are added to a polymer membrane material (2) as the base material for the membrane production, wherein a portion of the filler (3) is contained in the polymer film at 20 to 90% by weight, wherein the membrane material (4) comprising the filler (3) and optionally the additional additive, is extruded into a polymer film (5) loaded with the filler (3), and optionally with the additional additive, wherein the polymer film (5) is drawn, in particular, monoaxially and/or biaxially for the formation of pores, wherein a filler (3) having a mean particle diameter of 0.1 to 10 µm is utilized, **characterized in that** cavities are pulled open at the border between the filler particles and the polymer matrix, which form pores at the filter membrane (1), having a pore size in the range of 0.1 to 5 µm,.

2. The method according to claim 1, **characterized in that** at least one agent of the membrane material (2) is selected from the group of
(i) polyolefins;
(ii) the copolymers of polyolefins;
(iii) the mixtures of polyolefins and the copolymers thereof; and
(iv) polymer mixtures, comprising at least 10 % by weight polyolefins, and/or the copolymers thereof, based on the polymer mixture.

3. The method according to claims 1 or 2, **characterized in that** a portion of the filler (3) in the polymer film (5) is comprised at 30 to 80% by weight, particularly preferred at 40 to 70% by weight.

4. The method according to one of the previous claims, **characterized in that** an inorganic filler (3), in particular one from the group of carbonates, preferably calcium carbonate, magnesium carbonate, sodium carbonate, or barium carbonate, and/or from the group of silicas and silicates, preferably magnesium silicate hydrate, mica, feldspar, or glass, and/or from the group of sulfates, preferably calcium sulfate, magnesium sulfate, barium sulfate, or aluminum sulfate, and/or an organic filler (3), in particular from the group of polymers, and/or a mixture and combination of the groups and compounds mentioned above, is utilized as the filler (3).

5. The method according to one of the previous claims, **characterized in that** a filler (3), having a mean particle diameter of 0.1 to 8 µm, particularly preferred of 1 to 5 µm, is utilized.

6. The method according to one of the previous claims, **characterized in that** the drawing temperature is between 20 and 180°C, preferably between 40 and 120°C, particularly preferred between 50 and 110°C, below the melting and softening point of the polymer membrane material (2).

7. The method according to one of the previous claims, **characterized in that** the drawing is carried out by a factor of between 1.5 and 7, preferably between 2 and 5, particularly preferred between 2 and 4.

8. The method according to one of the previous claims, **characterized in that** at least one hydrophilization additive (6), in particular an amphiphilic hydrophilization additive (6), is added to the polymer membrane material (2) as an additional additive before or during the film extrusion, in particular wherein the hydrophilization additive (6) is a surfactant, preferably an anionic, cationic, nonionic, or cationic/anionic surfactant.

9. The method according to one of the previous claims, **characterized in that** an amphiphilic hydrophilization additive (6) is utilized, wherein the amphiphilic hydrophilization additive (6) comprises at least one alkyl, acyl, aryl, and/or arylacyl moiety, coupled with a heteroatom-containing group, in particular from the group of glycols, polyoxyethylenes, sulfides, sulfonates, amines, amides, phosphonates, and phosphates.

10. The method according to one of the previous claims 8 or 9, **characterized in that** a portion of the hydrophilization additive (6) in the polymer film (5) is obtained from 0.1 to 20% by weight, preferably from 0.5 to 15% by weight, particularly preferred from 1.0 to 10% by weight.

11. A filter membrane, by means of which flow rates of > 100 l/m³ h bars are possible, obtainable by means of a method according to one of the previous claims, wherein the filter membrane has pore sizes in the range of 0.1 to 5 µm.

## Revendications

1. Procédé de fabrication d'une membrane filtrante (1), à l'aide de laquelle des débits > 100 l/m².h.bar sont possibles, dans lequel une matière de charge (3), et éventuellement au moins un autre additif, sont mélangés à un matériau de membrane polymère (2) servant de matière de départ pour la fabrication de la membrane, la proportion de la matière de charge (3) dans le film polymère étant de 20 à 90 %, le matériau de membrane (4) comprenant la matière de charge (3) et éventuellement l'autre additif subissant une extrusion pour donner un film polymère (5) chargé de la matière de charge (3) et éventuellement de l'autre additif, le film polymère (5) subissant, pour la formation de pores, un étirage en particulier monoet/ou biaxial, ce à l'occasion de quoi on utilise une matière de charge (3) ayant une granulométrie moyenne de 0,1 à 10 µm, **caractérisé en ce que** des trous s'ouvrent à la limite entre les particules de matière de charge et la matrice polymère, trous qui forment les pores de la membrane filtrante (1) ayant une grosseur de pore comprise dans la plage de 0,1 à 5 µm.

2. Procédé selon la revendication 1, **caractérisé en ce qu'**au moins une substance du matériau de membrane (2) est choisie dans le groupe consistant en :
(i) les polyoléfines ;
(ii) les copolymères de polyoléfines ;
(iii) les mélanges de polyoléfines et de leurs copolymères ; et
(iv) les mélanges de polymères comprenant, par rapport au mélange de polymères, au moins 10 % en poids de polyoléfines et/ou de leurs copolymères.

3. Procédé selon la revendication 1 ou 2, **caractérisé en ce que** la proportion de la matière de charge (3) dans le film polymère (5) est de 30 à 80 % en poids, d'une manière particulièrement préférée de 40 à 70 % en poids.

4. Procédé selon l'une des revendications précédentes, **caractérisé en ce qu'**on utilise en tant que matière de charge (3) une matière de charge (3) inorganique, en particulier du groupe consistant en les carbonates, de préférence le carbonate de calcium, le carbonate de magnésium, le carbonate de sodium ou le carbonate de baryum, et/ou du groupe consistant en les dioxydes de silicium et les silicates, de préférence le silicate de magnésium hydraté, le mica, le feldspath ou les verres, et/ou du groupe consistant en les sulfates, de préférence le sulfate de calcium, le sulfate de magnésium, le sulfate de baryum ou le sulfate d'aluminium, et/ou une matière de charge (3) organique, en particulier du groupe consistant en les polymères, et/ou un mélange et une combinaison des groupes et composés mentionnés ci-dessus.

5. Procédé selon l'une des revendications précédentes, **caractérisé en ce qu'**on utilise une matière de charge (3) ayant une granulométrie moyenne de 0,1 à 8 µm, d'une manière particulièrement préférée de 1 à 5 µm.

6. Procédé selon l'une des revendications précédentes, **caractérisé en ce que** la température d'étirage est comprise entre 20 et 180°C, de préférence entre 40 et 120°C, d'une manière particulièrement préférée entre 50 et 110°C en-dessous du point de fusion et de ramollissement du matériau de membrane polymère (2).

7. Procédé selon l'une des revendications précédentes, **caractérisé en ce que** l'étirage est réalisé selon un facteur compris entre 1,5 et 7, de préférence entre 2 et 5, d'une manière particulièrement préférée entre 2 et 4.

8. Procédé selon l'une des revendications précédentes, **caractérisé en ce qu'**on ajoute au matériau de membrane polymère (2), avant ou pendant l'extrusion du film, en tant qu'autre additif un additif d'hydrophilisation (6), en particulier un additif d'hydrophilisation (6) amphiphile, en particulier dans lequel l'additif d'hydrophilisation (6) est un tensioactif, de préférence un tensioactif anionique, cationique, nonionique ou cationique-anionique.

9. Procédé selon l'une des revendications précédentes, **caractérisé en ce qu'**on utilise un additif d'hydrophilisation (6) amphiphile, l'additif d'hydrophilisation (6) amphiphile comprenant au moins un radical alkyle, acyle, aryle et/ou arylacyle, couplé à un groupe contenant un ou des hétéroatomes, en particulier du groupe des glycols, des polyoxyéthylènes, des sulfures, des sulfonates, des amines, des amides, des phosphonates et des phosphates.

10. Procédé selon l'une des revendications précédentes 8 ou 9, **caractérisé en ce qu'**on maintient dans le film polymère (5) une proportion de l'additif d'hydrophilisation (6) comprise entre 0,1 et 20 % en poids, de préférence entre 0,5 et 15 % en poids, d'une manière particulièrement préférée entre 1,0 et 10 % en poids.

11. Membrane filtrante, à l'aide de laquelle des débits > 100 l/m³.h.bar sont possibles, pouvant être obtenue par un procédé selon l'une des revendications précédentes, la membrane filtrante présentant des grosseurs de pores comprises dans la plage de 0,1 à 5 µm.
